# EUROPEAN PATENT APPLICATION

(11) **EP 3 782 887 A1**
(43) Date of publication of application: **24.02.2021**
(21) Application number: 20191653.3
(22) Date of filing: 19.08.2020
(51) Int. Cl.: B62J 11/13, B62K 21/06, B62K 19/32

(54) **STEERING UNIT FOR BICYCLES AND ROLLING BEARING FOR SUCH STEERING UNIT**

(30) Priority: 21.08.2019 IT 201900014886
(71) Applicant: Wilier Triestina S.p.A., 36028 Rossano Veneto (VI) (IT)
(72) Inventor: GASTALDELLO, Michele, 36028 ROSSANO VENETO (VI) (IT); SALOMONI, Claudio, 36100 VICENZA (IT); GENOVESE, Marco, 30030 PIANIGA (VE) (IT)
(74) Representative: Marchioro, Paolo

(57) **Abstract**

The present invention relates to a steering unit (10) for bicycles, comprising:
- a steering tube (11) of a bicycle frame (12);
- a handlebar (13) with a central block (14) rotatably constrained to the steering tube (11);
- a rolling bearing (15), having a central through opening (15a), coaxial to the steering tube (11) and to the central block (14) and interposed between the steering tube (11) and the central block (14);
- a fork (16) with a steerer (17) inserted into the steering tube (11) and positioned so as to coaxially cross with a portion (17a) thereof the rolling bearing (15); the steerer (17) is constrained to said central block (14) of the handlebar (13);
- at least one cable (18), for a gearbox or a brake.

Such at least one cable (18) passes into the central through opening (15a) of the rolling bearing (15) between the portion (17a) of the steerer (17) and the rolling bearing (15) itself.

The rolling bearing (15) is configured so that:
- the value of its outer diameter (20) is less than 47 millimetres,
- the value of its inner diameter (21) is greater than 36 millimetres.

## Description

The invention relates to a steering unit for bicycles.

The invention also relates to a rolling bearing for a similar steering unit. Nowadays the type of bicycles with completely hidden cables is increasingly common and popular.

Bikes of this new conception were designed to offer maximum performance levels in terms of rigidity and aerodynamics, therefore they are ideal for anyone putting themselves to the test in the type of races in which the average speeds are very high and in which fractions of a second can make the difference.

As the structural lightening of top range bikes has now reached the limit, manufacturers are focusing on improving aerodynamic performance levels. The front part of the bike is the one that first meets with air resistance, and it is increasingly important to pursue the aim of reducing the impact surface of such front part with the air.

Furthermore, bikes known as 'aero', i.e. road bikes characterized by high aerodynamic efficiency, envisage the passage of the gear change and brake control cables completely within the frame, i.e. they envisage an integrated passage of cables that already start from the bend of the handlebar, with cables that enter into the frame through the handlebar connection.

In this way, all the cable glands, as well as the sheaths, also disappear to the advantage of the aerodynamics and the reduction of turbulence, obviously also to the advantage of the aesthetics.

Nowadays, one of the most problematic aspects regards the external diametrical dimensions of the steering tube, and generally the steering head, i.e. the upper front area of the frame and the junction which connects the horizontal tube of the frame with the steering tube of the same frame.

To date, for such type of bicycles, in which the steering tube contains both a rolling bearing for the rotatable constraint of the handlebar, and an internal space suitable for the passage of all the command cables that come from the handlebar and that are directed to the brakes and the derailleur control devices, the minimum front diametrical dimension that can be obtained is 56 millimetres.

Steering units known today for such 'aero' bicycles can be grouped into two main types.

A first type of such steering units envisages the adoption of standardized rolling bearings, axially crossed by a fork steerer, which has a crushed stretch so as to define a D-shaped cross section, where the crushed stretch enables a space to be defined between the steerer and the bearing such as to enable the passage of the command cables.

Such first type of steering unit has some problems connected with the necessary processes for realizing the D-shaped section of the fork steerer, as well as the lack of rigidity determined by the actual peculiar shape of the steerer itself.

A second type of steering units envisages the adoption of rolling bearings of different sizes such as to be able to house in the central hole both a normal steerer, i.e. without a D-shaped section, and the command cables.

Such second type of steering unit determines the drawback of the use of standardized rolling bearings of relatively large outer diametrical dimensions, with a consequent increase in the total weight of the unit and poor aerodynamicity due to the corresponding dimensions of the steering tube in which the rolling bearing is to be housed.

The task of the present invention is that of developing a steering unit for bicycles able to overcome the mentioned drawbacks and limits of the prior art. In particular, an object of the invention is that of developing a more rigid steering unit with respect to steering units with a D-shaped section steerer of the known type.

Another object of the invention is that of developing a lighter steering unit than steering units with internal cables of the known type.

A further object of the invention is that of developing a steering unit with improved aerodynamicity with respect to steering units of the known type. Again, an object of the invention is that of developing a rolling bearing for a similar steering unit.

The task as well as the objects mentioned above are achieved by a steering unit for bicycles according to claim 1.

Further characteristics of the steering unit according to claim 1 are described in the dependent claims.

The aforesaid task and objects, together with the advantages that will be mentioned hereinafter, are indicated by the description of an embodiment of the invention, which is given by way of non-limiting example with reference to the attached drawings, where:

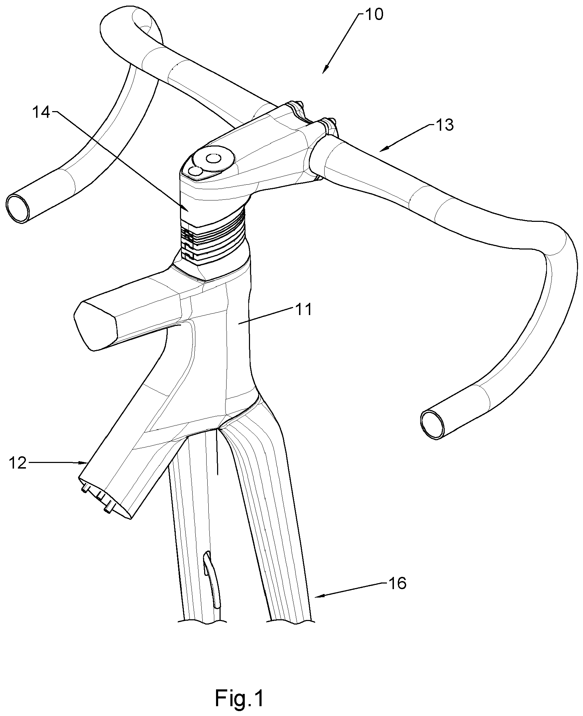

- figure 1 represents a perspective view of a steering unit according to the invention;
- figure 2 represents a lateral sectional view of the steering unit of figure 1;
- figure 3 represents a lateral sectional view of a rolling bearing according to the invention;
- figure 4 represents a perspective exploded view of the rolling bearing according to the invention;
- figure 5 represents a section from above of the steering unit according to the invention;

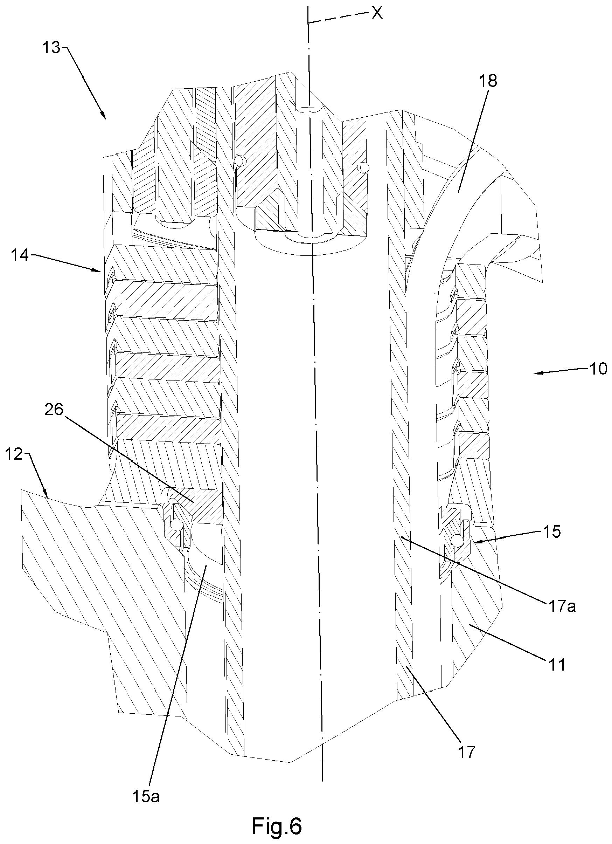

- figure 6 represents a broken away perspective view of the steering unit according to the invention.

With reference to the cited figures, a steering unit according to the invention is indicated as a whole by number **10.**

Such steering unit **10** for bicycles comprises:
- a steering tube **11** of a bicycle frame **12;**
- a handlebar **13** with a central block **14** rotatably constrained to the steering tube **11;**
- a rolling bearing **15,** having a central through opening **15a,** coaxial to the steering tube **11** and to the central block **14** and interposed between the steering tube **11** and the central block **14;**
- a fork **16** with a steerer **17,** which steerer **17** is inserted into the steering tube **11** and is positioned so as to coaxially cross with a portion **17a** thereof the rolling bearing **15;** such steerer **17** is constrained to the central block **14** of the handlebar **13;**
- at least one cable, for example four cables, two of which, indicated with the numbers **18** and **19,** are represented by way of example, again for example and respectively for the central gearbox, derailleur and two brakes.

It is to be considered that there may be one cable, for a single brake, or two cables for one brake and one gearbox, or two cables for the front and rear brakes only, or four cables two of which for the brakes and two for the gearboxes, or even more cables.

The peculiarity of the steering unit **10** according to the invention lies in the fact that the cables **18** and **19** pass into the central through opening **15a** of the rolling bearing **15** between the portion **17a** of the steerer **17** and the rolling bearing **15** itself.

Furthermore, the rolling bearing **15** is configured so that:
- the value of its outer diameter **20** is less than 47 millimetres,
- the value of its inner diameter **21** is greater than 36 millimetres.

In particular, the value of the outer diameter **20** is comprised between 42 millimetres and 47 millimetres, including such values; the value of the outer diameter **20** is, for example, 46.9 millimetres.

Again, in particular, the value of the inner diameter **21** is comprised between 36.5 millimetres and 39.5 millimetres, including such values; the value of the inner diameter **21** is, for example, 39 millimetres.

Thanks to a rolling bearing **15** having such dimensions, it is possible that both the steerer **17,** having a circular section in its portion **17a,** and the command cables **18** and **19** pass into the central through opening **15a** of the rolling bearing **15** itself.

In particular, the portion **17a** of the steerer **17,** which is positioned at said rolling bearing **15,** has a circular section.

Again, in particular, the steerer **17** has an outer diameter **23** having a value comprised between 24 millimetres and 31 millimetres; preferably, the outer diameter **23** has a value between 28.6 millimetres, and 28.5 millimetres, or substantially 1" 1/8.

In general, the steerer **17** can have a cross section of a different size and shape with respect to what has been described above.

The value of the height **22** of the rolling bearing **15** is less than 10 millimetres. In particular, the value of the height **22** is comprised between 3.5 millimetres and 7 millimetres, including such values; for example, the value of the height **22** is 7 millimetres.

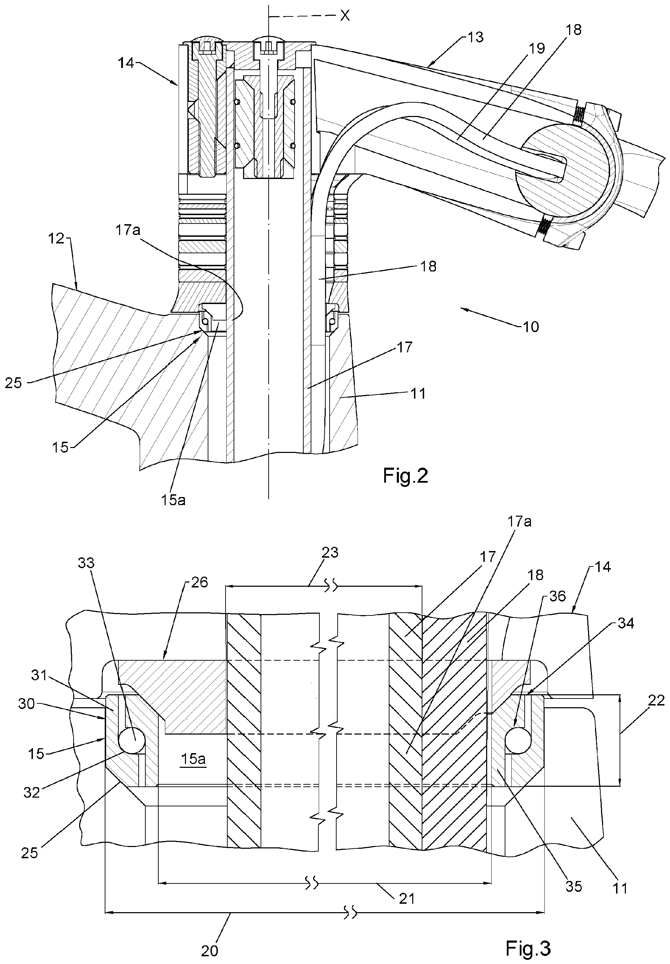

The central block **14** of the handlebar **13** is rigidly constrained to the steerer **17** in a known way, as highlighted in figure 2.

The rolling bearing **15** is housed in a corresponding seat **25** defined at the upper end of the steering tube **11,** as can be seen in figures 2 and 3.

The rolling bearing **15,** as can be seen from the figures, is directly housed in the seat **25,** where such seat **25** is an integral part of the steering tube **11;** the seat **25** is not therefore defined on a different cup-shaped body distinct from the steering tube **11,** rather the seat **25** is defined at the upper end of the steering tube **11.**

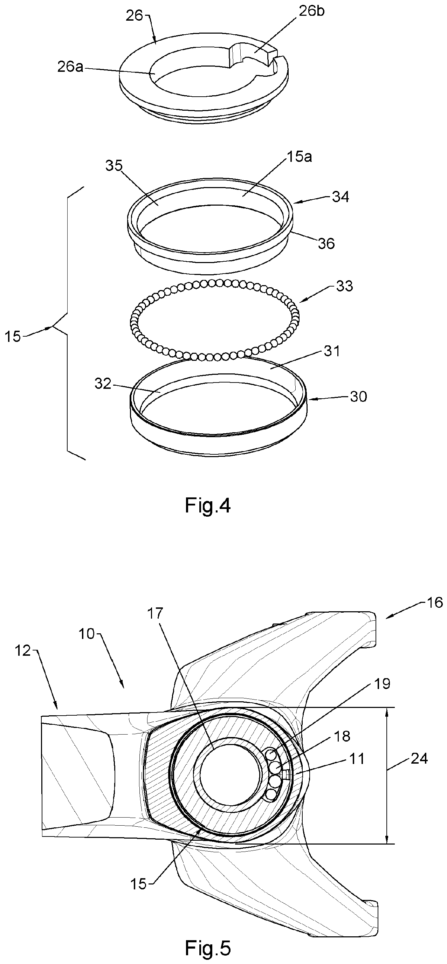

The rolling bearing **15** is clearly represented in the exploded view of figure 4. The rolling bearing **15** is of the oblique type.

Alternatively, the rolling bearing **15** is of the axial type.

Such rolling bearing **15** is of the ball type **33.**

Such rolling bearing **15** is to be considered to be able to be of a different type, e.g. of the type with rollers.

Such bearing **15** comprises:
- an outer ring **30,** defining an outer wall **31** and an inner shoulder **32** with a section at least partially shaped like an arc of a circle, which inner shoulder **32** is shaped to support the balls **33;**
- an inner ring **34,** defining an inner wall **35** and an outer shoulder **36** with a section at least partially shaped like an arc of a circle, which outer shoulder **36** is shaped to support the balls **33** on the opposite side of the latter with respect to the inner shoulder **32** of the outer ring **30.**

The balls **33** preferably have a diameter comprised between 1 and 3 millimetres, including such values.

For example, the balls **33** have a diameter of 2 millimetres.

Such balls **33** are free, i.e. they are not withheld inside an annular cage.

Such balls **33** are to be considered in a sufficient number to substantially fill the whole annular space between the two mutually facing inner **32** and outer **36** shoulders.

It is known that the contact angle is defined as the angle between the line joining the contact points between a ball and the tracks on the radial plane, along which the combined load is transmitted from one track to another, and a perpendicular line to the axis of the bearing.

The contact angle of the balls **33** is comprised between 40° and 50°. Preferably, the contact angle of the balls **33** is comprised between 45° and 47°, including such angles; even more preferably the contact angle is 45°.

In proximity to the rolling bearing **15** there is an auxiliary centring ring **26.** Such auxiliary ring **26** has:
- a central opening **26a** shaped to be crossed in the axial direction **X** by the steerer **17,**
- and an eccentric passage opening **26b** for the command cables **18** and **19;** such eccentric opening **26b** is represented in the figures as being positioned to the front of the steerer **17** with respect to an advancement direction of a bicycle on which the same auxiliary ring **26** is mounted.

Such eccentric opening **26b,** as can be clearly seen in the figures, is defined by a single eccentric opening, and not by a plurality of through holes.

In particular, as can be clearly seen, the eccentric opening **26b** consists of a single slot-shaped hollow open radially towards the inside, i.e. towards the axis of rotation determined by the axial direction **X.**

Thanks to such eccentric opening **26b** the command cables **18** and **19** can be made to pass into the rolling bearing **15** simply and quickly.

Such auxiliary ring **26** is inserted at least partially into the inner ring **34** of the rolling bearing **15.**

The outer ring **30** is instead coupled with the seat **25** defined at the upper end of the steering tube **11.**

As can be clearly seen from the figures, the seat **25** is directly defined at the upper end of the steering tube **11,** and not in a relevant cup-shaped body external to the steering tube.

Such auxiliary ring **26** is positioned above the rolling bearing **15** with respect to a normal use arrangement of the bicycle of which the steering unit **10** is a part. Such auxiliary ring **26** is coupled to the inner ring **34** of the rolling bearing **15.** In an alternative not illustrated, such auxiliary ring **26** can have more than one passage opening for the cables, e.g. two lateral cable passage openings, or two cable passage openings of which one is at the front and one at the rear with respect to an advancement direction of the bicycle on which the actual auxiliary ring **26** is mounted.

The position of the one or more passage openings for the cables is configured in relation to the position that the cables assume as they descend from the handlebar unit **13.**

Any other position, too, on such auxiliary ring **26,** of the one or more cable passage openings, is to be considered comprised in the invention.

An alternative solution is also to be considered in which the cables are directed towards a predetermined position of the one or more passage openings for the cables, e.g. in the aforementioned case of two cable passage openings positioned on opposite lateral positions, or in the case of a single cable passage opening positioned to the rear of the steerer **17** with respect to an advancement direction of the bicycle.

The central block **14** of the handlebar **13** is positioned above such auxiliary ring **26.**

The term 'outer diameter' **24** means the outer dimension of the steering tube **11,** on a horizontal plane, in an orthogonal direction to the front-rear direction of the bicycle of which the steering unit **10** is a part.

The term 'outer diameter' therefore refers to the steering tube **11** regardless of the shape of the cross section of the steering tube itself, which shape of the cross section can be considered to be circular, or oval, or 'drop' shaped with a front tip, or another curved or at least partially curved, similar and equivalent shape.

Such outer diameter **24** can obviously be considered to be the outer dimension of the steering tube **11** as defined above, which is at the height of the rolling bearing **15** in the axial direction **X.**

Thanks to a similar steering unit **10** according to the invention, it is possible to reduce the outer diameter **24** of the steering tube **11,** highlighted in figure 5, to a value less than 56 millimetres, where such value of 56 millimetres represents the current limit for bicycles with internal cables currently known. For example, the outer diameter **24** of the steering tube **11** has a value comprised between 56 millimetres and 50 millimetres.

For example, the outer diameter **24** of the steering tube **11** has a value comprised between 54 millimetres and 52 millimetres.

For example, the outer diameter **24** of the steering tube **11** has a value of 54 millimetres.

For example, in the present embodiment, the outer diameter **24** of the steering tube **11** has a value of 52 millimetres.

Such reduction in the outer diameter **24** of the steering tube **11** enables the aerodynamicity of the upper front area of the bicycle, where the steering tube is located, to be notably improved.

The reduction in the outer diameter, and therefore in the total volume, enables an appreciable reduction in weight, to be obtained.

The subject matter of the invention is also a rolling bearing **15.**

Such rolling bearing **15** is of the oblique ball type.

Such rolling bearing **15** is configured so that:
- the value of its outer diameter **20** is less than 47 millimetres,
- the value of its inner diameter **21** is greater than 36 millimetres.

Such rolling bearing **15** according to the invention is to be considered to correspond to what has been described above.

Such rolling bearing **15** is well suited to being inserted into a steering unit **10** according to the invention itself.

It has in practice been established that the invention achieves the intended task and objects.

In particular, with the invention, a steering unit for bicycles has been developed which can overcome the mentioned drawbacks and limits of the prior art.

With the invention a steering unit with improved aerodynamicity with respect to steering units for bikes of the known type has been developed.

With the invention a more rigid steering unit with respect to steering units with a D-shaped section steerer of the known type, which is, at the same time, lighter than steering units of the known type, has been also developed. Furthermore, with the invention, a rolling bearing for a similar steering unit has also been developed.

The invention as it is conceived is susceptible to numerous modifications and variants, all falling within the scope of the inventive concept; furthermore, all the details can be replaced by other technically equivalent elements.

In practice, any components and materials can be used according to requirements and the state of the art, as long as they are compatible with the specific use, the dimensions and the contingent shapes.

Where the characteristics and techniques mentioned in any claim are followed by reference signs, such reference signs should be intended as having been added for the sole purpose of increasing the intelligibility of the claims and consequently such reference signs have no limiting effect on the interpretation of each element identified by way of example by such reference signs.

## Claims

1. Steering unit (10) for bicycles, comprising:
- a steering tube (11) of a bicycle frame (12);
- a handlebar (13) with a central block (14) rotatably constrained to said steering tube (11);
- a rolling bearing (15), having a central through opening (15a), coaxial to said steering tube (11) and to said central block (14) and interposed between said steering tube (11) and said central block (14);
- a fork (16) with a steerer (17), said steerer (17) being inserted in said steering tube (11), said steerer (17) being constrained to said central block (14) of said handlebar (13);
- at least one cable (18), for a gearbox or a brake,
**characterized in that:**
- said steerer (17) is positioned so as to coaxially cross with a portion (17a) thereof said rolling bearing (15);
- said at least one cable (18) passes into said central through opening (15a) of said rolling bearing (15) between said portion (17a) of said steerer (17) and said rolling bearing (15) itself;
- said rolling bearing (15) being housed in a corresponding seat (25) defined at the upper end of said steering tube (11);
- said rolling bearing (15) being configured so that:
- the value of its outer diameter (20) is less than 47 millimetres,
- the value of its inner diameter (21) is greater than 36 millimetres.

2. Steering unit according to claim 1, **characterized in that** said portion (17a) of said steerer (17) that is positioned at said rolling bearing (15) has a circular section.

3. Steering unit according to one or more of the preceding claims, **characterized in that** the value of the outer diameter (20) is comprised between 42 millimetres and 47 millimetres, including such values.

4. Steering unit according to one or more of the preceding claims, **characterized in that** the value of the inner diameter (21) is comprised between 36.5 millimetres and 39.5 millimetres, including such values.

5. Steering unit according to one or more of the preceding claims, **characterized in that** said steerer (17) has an outer diameter (23) having a value comprised between 24 millimetres and 31 millimetres.

6. Steering unit according to one or more of the preceding claims, **characterized in that** said steerer (17) has an outer diameter (23) having a value comprised between 28.6 millimetres and 28.5 millimetres, i.e. substantially 1" 1/8.

7. Steering unit according to one or more of the preceding claims, **characterized in that** said rolling bearing (15) is of the ball type (33).

8. Steering unit according to one or more of the preceding claims, **characterized in that** said rolling bearing (15) is of the oblique type.

9. Steering unit according to one or more of the preceding claims, **characterized in that** said rolling bearing (15) comprises:
- an outer ring (30), defining an outer wall (31) and an inner shoulder (32) with a section at least partially shaped like an arc of a circle, which inner shoulder (32) is shaped to support said balls (33);
- an inner ring (34), defining an inner wall (35) and an outer shoulder (36) with a section at least partially shaped like an arc of a circle, which outer shoulder (36) is shaped to support said balls (33) on the opposite side of the latter with respect to said inner shoulder (32) of said outer ring (30);
said balls (33) preferably having a diameter comprised between 1 and 3 millimetres, including such values;
said balls (33) being free, i.e. not being withheld inside an annular cage.

10. Steering unit according to one or more of the preceding claims, **characterized in that** in proximity to said rolling bearing (15) there is an auxiliary centring ring (26).

11. Steering unit according to the preceding claim, **characterized in that** said auxiliary ring (26) has:
- a central opening (26a) shaped to be crossed in the axial direction (X) by the steerer (17),
- and an eccentric passage opening (26b) for the command cables (18, 19).
